(19) Europäisches Patentamt
European Patent Office
Office européen des brevets

(11) **EP 2 173 990 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(21) Anmeldenummer: **08786279.3**

(22) Anmeldetag: **21.07.2008**

(51) Int Cl.:
**F02D 31/00** *(2006.01)* **F02D 41/14** *(2006.01)*

(86) Internationale Anmeldenummer:
**PCT/EP2008/059499**

(87) Internationale Veröffentlichungsnummer:
**WO 2009/013256 (29.01.2009 Gazette 2009/05)**

(54) **VERFAHREN UND VORRICHTUNG ZUM BETREIBEN EINER ANTRIEBSEINHEIT**

METHOD AND APPARATUS FOR OPERATING A DRIVE UNIT

PROCÉDÉ ET DISPOSITIF POUR ACTIONNER UNE UNITÉ DE PROPULSION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.07.2007 DE 102007035097**

(43) Veröffentlichungstag der Anmeldung:
**14.04.2010 Patentblatt 2010/15**

(73) Patentinhaber: **Robert Bosch GmbH**
**70442 Stuttgart (DE)**

(72) Erfinder:
• **KETTENACKER, Guenter**
**71711 Steinheim (DE)**
• **RULAND, Christian**
**73630 Remshalden (DE)**
• **SCHWARZE, Klaus**
**37115 Duderstadt (DE)**

(56) Entgegenhaltungen:
**EP-A- 1 045 122 DE-A1- 19 926 351**
**DE-A1-102004 058 231 JP-A- 2004 245 191**

**Beschreibung**

Stand der Technik

Die Erfindung geht von einem Verfahren und von einer Vorrichtung zum Betreiben einer Antriebseinheit nach der Gattung der unabhängigen Ansprüche aus.

Aus der DE 197 39 564 A1 sind bereits ein Verfahren und eine Vorrichtung zur Steuerung einer Antriebseinheit eines Fahrzeugs bekannt, wobei auf der Basis des Fahrerwunsches ein Sollmomentenwert oder ein Sollleistungswert gebildet wird, der zur Steuerung der Antriebseinheit dient, wobei ein maximal zulässiges Moment oder eine maximal zulässige Leistung bestimmt wird und der Sollwert auf den maximal zulässigen Wert begrenzt wird, wenn er den maximal zulässigen Wert überschreitet.

Vorteile der Erfindung

Offenbarung der Erfindung

Das erfindungsgemäße Verfahren und die erfindungsgemäße Vorrichtung mit den Merkmalen der unabhängigen Ansprüche haben demgegenüber den Vorteil, dass ein Sollwert einer zweiten Ausgangsgröße, vorzugsweise einer Drehzahl oder einer Geschwindigkeit, für die Antriebseinheit vorgegeben wird, dass ein Istwert der zweiten Ausgangsgröße der Antriebseinheit ermittelt wird, dass der Sollwert mit dem Istwert verglichen wird, dass für den Fall, in dem kein Überschreiten des Sollwertes durch den Istwert festgestellt wird, die erste Ausgangsgröße auf einen ersten Wert begrenzt wird und dass für den Fall, in dem ein Überschreiten des Sollwertes durch den Istwert festgestellt wird, die erste Ausgangsgröße auf einen zweiten Wert kleiner als der erste Wert begrenzt wird. Auf diese Weise lässt sich eine Begrenzung der ersten Ausgangsgröße der Antriebseinheit abhängig von der Differenz zwischen Istwert der zweiten Ausgangsgröße und Sollwert der zweiten Ausgangsgröße realisieren. Speziell bei einer drehzahlgeführten oder geschwindigkeitsgeregelten Antriebseinheit lässt sich dabei eine Begrenzung einer von der Drehzahl bzw. der Geschwindigkeit verschiedenen ersten Ausgangsgröße der Antriebseinheit abhängig von der Differenz zwischen Istdrehzahl und Solldrehzahl bzw. abhängig von der Differenz zwischen Istgeschwindigkeit und Sollgeschwindigkeit realisieren. Somit kann eine Rücksetzung des Steuergerätes oder eine Sicherheitsabschaltung der Antriebseinheit bei Überschreiten der Solldrehzahl durch die Istdrehzahl bzw. bei Überschreiten der Sollgeschwindigkeit durch die Istgeschwindigkeit zunächst vermieden und damit die Verfügbarkeit der Antriebseinheit erhöht werden.

Durch die in den Unteransprüchen aufgeführten Maßnahmen sind vorteilhafte Weiterbildungen und Verbesserungen des im Hauptanspruch angegebenen Verfahrens möglich.

Dabei ist es vorteilhaft, wenn als erster Wert ein maximal zulässiger Wert gewählt wird. Auf diese Weise wird für den Fall, in dem kein Überschreiten des Sollwertes der zweiten Ausgangsgröße durch den Istwert der zweiten Ausgangsgröße festgestellt wird, für die erste Ausgangsgröße der größtmögliche Wertebereich zugelassen und damit der Betrieb der Antriebseinheit in keinster Weise eingeschränkt.

Vorteilhaft ist ferner, wenn die erste Ausgangsgröße nur dann auf den zweiten Wert begrenzt wird, wenn der Istwert der zweiten Ausgangsgröße den Sollwert der zweiten Ausgangsgröße um mehr als einen vorgegebenen Offsetwert überschreitet. Auf diese Weise wird durch den vorgegebenen Offsetwert ein Toleranzbereich realisiert. Für den Fall, dass ein Regler vorgesehen ist, der den Istwert der zweiten Ausgangsgröße dem Sollwert der zweiten Ausgangsgröße nachführt, kann auf diese Weise sichergestellt werden, dass Überschwinger des Istwertes der zweiten Ausgangsgröße über den Sollwert der zweiten Ausgangsgröße oder am Regler auszuregelnde dynamische Vorgänge, wie z. B. das Abfangen von Sturzgas bei einer Brennkraftmaschine noch nicht die Begrenzung der ersten Ausgangsgröße auf den zweiten Wert zur Folge haben und somit der Arbeitsbereich des Reglers durch die Begrenzung nicht eingeschränkt wird.

Ein weiterer Vorteil ergibt sich, wenn der zweite Wert mit zunehmender Überschreitung des Sollwertes der zweiten Ausgangsgröße durch den Istwert der zweiten Ausgangsgröße kleiner gewählt wird. Auf diese Weise lässt sich der zweite Wert flexibel an die Differenz zwischen Istwert der zweiten Ausgangsgröße und Sollwert der zweiten Ausgangsgröße anpassen und dadurch eine Sicherheitsabschaltung der Antriebseinheit oder ein Rücksetzen des Steuergerätes möglichst lange hinauszögern, so dass die Verfügbarkeit der Antriebseinheit noch weiter erhöht wird.

Eine besonders einfache Realisierung der Rücknahme des zweiten Wertes mit zunehmender Überschreitung des Sollwertes der zweiten Ausgangsgröße durch den Istwert der zweiten Ausgangsgröße lässt sich mit Hilfe eines linearen Zusammenhangs gemäß einer Rampenfunktion realisieren.

Vorteilhaft ist weiterhin, wenn zur Begrenzung der ersten Ausgangsgröße ein Sollwert für die erste Ausgangsgröße begrenzt wird. Auf diese Weise kann bereits im Ansatz verhindert werden, dass der Istwert für die erste Ausgangsgröße über dem Grenzwert für die erste Ausgangsgröße hinausgeht.

Eine besonders vorteilhafte Realisierung ergibt sich, wenn abhängig vom Vergleich zwischen dem Sollwert der zweiten Ausgangsgröße und dem Istwert der zweiten Ausgangsgröße ein Regler einen Sollwert für die erste Ausgangsgröße vorgibt, um den Istwert der zweiten Ausgangsgröße dem Sollwert der zweiten Ausgangsgröße nachzuführen und wenn zur Begrenzung der ersten Ausgangsgröße der Sollwert für die erste Ausgangsgröße begrenzt wird. Auf diese Weise lässt sich das erfindungsgemäße Verfahren besonders einfach in ein Reglerkonzept zur Regelung des Istwertes der zweiten Ausgangsgröße auf den Sollwert der zweiten Ausgangsgröße integrieren und damit ein unerwünscht starkes Ansteigen des Istwertes der zweiten Ausgangsgröße über den Sollwert der zweiten Ausgangsgröße vermeiden.

Ein weiterer Vorteil ergibt sich, wenn für den Fall, in dem ein Überschreiten des Sollwertes der zweiten Ausgangsgröße durch den Istwert der zweiten Ausgangsgröße festgestellt wird, geprüft wird, ob ein Istwert für die erste Ausgangsgröße den zweiten Wert überschreitet und das in diesem Fall ein Fehler erkannt und eine Fehlerreaktionsmaßnahme eingeleitet wird. Auf diese Weise wird sichergestellt wird, dass auch bei einer Begrenzung des Sollwertes für die erste Ausgangsgröße auf den zweiten Wert ein fehlerhaftes Ansteigen des Istwertes für die erste Ausgangsgröße erkannt werden kann.

In vorteilhafter Weise wird für die erste Ausgangsgröße ein Drehmoment, insbesondere ein indiziertes Drehmoment oder eine Leistung der Antriebseinheit gewählt.

Zeichnung

Ausführungsbeispiele der Erfindung ist in der Zeichnung dargestellt und in der nachfolgenden Beschreibung näher erläutert. Es zeigen:

Figur 1    ein Funktionsdiagramm der erfindungsgemäßen Vorrichtung,

Figur 2    einen beispielhaften Ablauf des erfindungsgemäßen Verfahrens,

Figur 3    eine Kennlinie eines Grenzwertes für ein Drehmoment der Antriebseinheit in Abhängigkeit einer Drehzahldifferenz und

Figur 4    eine Kennlinie eines Grenzwertes für ein Drehmoment der Antriebseinheit in Abhängigkeit einer Geschwindigkeitsdifferenz.

Beschreibung der Ausführungsbeispiele

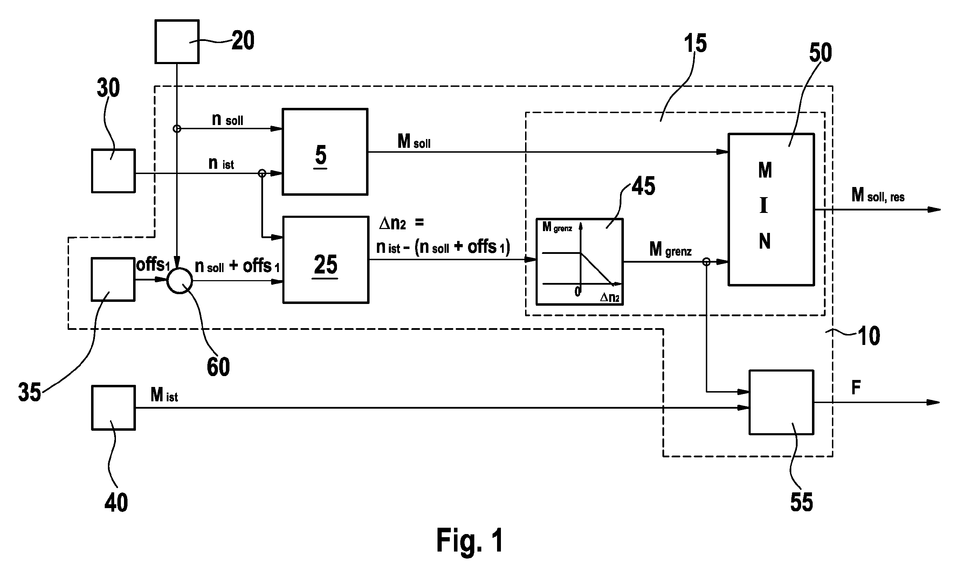

In Figur 1 kennzeichnet 10 eine erfindungsgemäße Vorrichtung zum Betreiben einer Antriebseinheit in Form eines Funktionsdiagramms. Die Vorrichtung kann dabei beispielsweise software- und/oder hardwaremäßig in eine Steuerung, beispielsweise eine Motorsteuerung der Antriebseinheit, implementiert sein. Die Antriebseinheit kann beispielsweise eine Brennkraftmaschine, einen Elektromotor oder einen Hybridantrieb aus Brennkraftmaschine und Elektromotor umfassen. Die Antriebseinheit kann dabei beispielsweise ein Kraftfahrzeug antreiben. Sie kann aber auch einen Generator oder eine Baumaschine antreiben. Das erfindungsgemäße Verfahren und die erfindungsgemäße Vorrichtung eignen sich dabei besonders zum Betreiben einer Antriebseinheit, die drehzahlgeführt oder geschwindigkeitsgeregelt ist. Im Falle, dass die Antriebseinheit eine Brennkraftmaschine umfasst, kann die Brennkraftmaschine beispielsweise als Ottomotor oder als Dieselmotor ausgebildet sein. Im Falle der Antriebseinheit eines Kraftfahrzeugs kann diese beispielsweise in mindestens einem ersten Betriebszustand, beispielsweise dem Leerlaufbetriebszustand drehzahlgeführt und/oder in mindestens einem zweiten Betriebszustand geschwindigkeitsgeregelt sein. Letzteres eignet sich besonders bei Antrieb eines Fahrzeugs als Fahrgeschwindigkeitsregelung. Im mindestens einen ersten Betriebszustand findet eine Drehzahlregelung statt. Im mindestens einen zweiten Betriebszustand findet eine Geschwindigkeitsregelung statt.

Eine erste Ausgangsgröße der Antriebseinheit, beispielsweise ein Drehmoment, eine Leistung oder - im Falle einer Brennkraftmaschine - auch eine Brennraumfüllung, die von der Drehzahl und der Geschwindigkeit der Antriebseinheit verschieden ist, wird wie beispielsweise aus der DE 197 39 564 A1 bekannten Weise auf einen maximal zulässigen Wert begrenzt. Dabei kann es sich im Falle des Drehmoments beispielsweise um das indizierte Drehmoment handeln. Im folgenden soll beispielhaft angenommen werden, dass die zu begrenzende erste Ausgangsgröße der Antriebseinheit ein Drehmoment ist. Dabei kann der Istwert für das Drehmoment oder der Sollwert für das Drehmoment begrenzt werden. Im folgenden soll beispielhaft davon ausgegangen werden, dass der Sollwert für das Drehmoment begrenzt wird. Dies ist auch aus der DE 197 39 564 A2 bekannt.

Gemäß einem ersten Ausführungsbeispiel der Erfindung soll eine drehzahlgeführte Antriebseinheit und gemäß einem zweiten Ausführungsbeispiel der Erfindung eine geschwindigkeitsgeregelte Antriebseinheit betrachtet werden.

Als zweite Ausgangsgröße der Antriebseinheit wird somit im ersten Ausführungsbeispiel eine Drehzahl der Antriebseinheit und im zweiten Ausführungsbeispiel eine Geschwindigkeit eines von der Antriebseinheit angetriebenen Fahrzeugs betrachtet.

Die Vorrichtung 10 in Figur 1 umfasst eine Sollwertbildungseinheit 5, die einen Sollwert Msoll für das Drehmoment der Antriebseinheit bildet und einem Minimalauswahlglied 50 als Eingangsgröße zuführt. Ferner ist eine Vorgabeeinheit 20 vorgesehen, die einen Sollwert für die zweite Ausgangsgröße der Antriebseinheit, also gemäß dem ersten Ausführungsbeispiel der Drehzahl nsoll und gemäß dem zweiten Ausführungsbeispiel der Geschwindigkeit vsoll vorgibt.

Im folgenden wird die Vorrichtung 10 anhand des ersten Ausführungsbeispiels beschrieben. Die Funktionsweise für das zweite Ausführungsbeispiel ist dabei entsprechend, wobei statt einer Drehzahlvorgabe eine Geschwindigkeit beispielsweise vom Fahrer mittels einem Lenkstockhebel als Sollgeschwindigkeit vsoll vorgegeben und eine Istgeschwindigkeit vist mittels eines Geschwindigkeitssensors in dem Fachmann bekannter Weise ermittelt wird.

Dabei kann die Vorgabeeinheit 20 wie in Figur 1 dargestellt außerhalb der erfindungsgemäßen Vorrichtung 10, alternativ aber auch innerhalb der Vorrichtung 10 liegen.

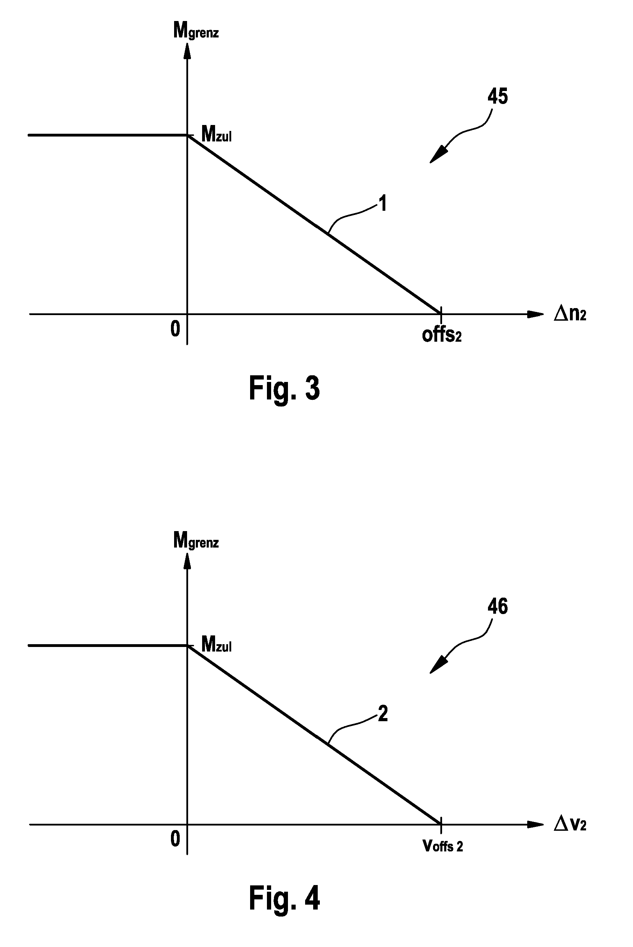

Für einen ersten oder Leerlaufbetriebszustand gibt dabei die Vorgabeeinheit 20 gemäß der ersten Ausführungsform der Erfindung eine beispielsweise auf einem Prüfstand geeignet applizierte Leerlaufdrehzahl als Sollwert nsoll für die Drehzahl vor. Diese kann im Falle eines Kraftfahrzeugs beispielsweise bei 900 Umdrehungen pro Minute liegen. Die Vorrichtung 10 empfängt von einem Drehzahlsensor 30 einen Istwert nist für die Drehzahl der Antriebseinheit. Der Istwert nist wird einer ersten Vergleichseinheit 25 der Vorrichtung 10 zugeführt. Die Vorrichtung 10 umfasst ferner einen Offsetwertspeicher 35, aus dem ein erster Offsetwert offs1 ausgelesen wird. Dieser wird in einem Additionsglied 60 zum Sollwert nsoll für die Drehzahl hinzuaddiert. Die sich bildende Summe nsoll + offs1 wird ebenfalls der ersten Vergleichseinheit 25 zugeführt. Der erste Offsetwert offs1 wird beispielsweise auf einem Prüfstand derart geeignet appliziert, dass ein Toleranzbereich für den Istwert nist der Drehzahl oberhalb des Sollwertes nsoll der Drehzahl realisiert wird, der noch nicht zu einer Begrenzung des Sollwertes Msoll des Drehmomentes der Antriebseinheit führt und damit beispielsweise den Arbeitsbereich eines Drehzahlreglers nicht einschränkt. Die erste Vergleichseinheit 25 bildet eine Differenz $\Delta n2$ zwischen dem Istwert nist der Drehzahl und der Summe nsoll + offs1 am Ausgang des Additionsgliedes 60, so dass $\Delta n2 = nist - (nsoll + offs1)$ ist. Die Differenz $\Delta n2$ wird als Eingangsgröße einer Kennlinie 45 zugeführt. Die Kennlinie 45 und das Minimalauswahlglied 50 bilden eine Begrenzungseinheit 15. Die Kennlinie 45 ist in Figur 3 dargestellt. Die Kennlinie 45 bildet dabei die Differenz $\Delta n2$ auf einen Grenzwert Mgrenz für den Sollwert Msoll des Drehmomentes der Antriebseinheit ab. Für Werte $\Delta n2$ kleiner gleich Null ergibt sich dabei für den Grenzwert Mgrenz ein erster Grenzwert, wobei für Werte $\Delta n2$ größer Null sich ein zweiter Wert für den Grenzwert Mgrenz ergibt, der kleiner als der erste Wert ist. In dem hier beschriebenen Beispiel wird als erster Wert ein maximal zulässiger Wert Mzul für das Drehmoment der Antriebseinheit gewählt. Der maximal zulässige Wert Mzul kann dabei beispielsweise wie aus der DE 197 39 564 A1 bekannt im Falle des Antriebs eines Kraftfahrzeugs aus der Fahrpedalstellung und der Motordrehzahl mit Hilfe eines Kennfeldes ermittelt werden. Der zweite Wert wird wie beschrieben generell kleiner als der erste Wert gewählt und kann gemäß einer vorteilhaften Ausführungsform mit zunehmender Überschreitung der Summe aus Solldrehzahl nsoll und erstem Offsetwert offs1 durch die Istdrehzahl nist kleiner gewählt werden. Dabei kann der zweite Wert beispielsweise gemäß Figur 3 ausgehend vom maximal zulässigen Wert Mzul für $\Delta n2$ gleich Null mit zunehmender Drehzahldifferenz $\Delta n2$ linear gemäß einer Rampenfunktion 1 bis auf den Wert Null verringert werden. Die Verringerung kann auch nicht linear erfolgen. Die Verringerung des Grenzwertes Mgrenz mit zunehmender Drehzahldifferenz $\Delta n2$ größer Null kann dabei beispielsweise auf einem Prüfstand derart geeignet appliziert werden, dass durch die Begrenzung des Sollwertes Msoll durch den Grenzwert Mgrenz ein unerwünschter Anstieg der Istdrehzahl nist über die Solldrehzahl nsoll für jede Drehzahldifferenz $\Delta n2$ größer Null vermieden wird. die Applikation einer solchen Kennlinie ist jedoch in der Regel aufwendiger als die Verwendung der linearen Rampenfunktion gemäß Figur 3. Die lineare Rampenfunktion kann nämlich mit Hilfe einer mathematischen Gleichung und damit besonders wenig aufwendig realisiert werden. Dabei lautet die Gleichung für die lineare Rampenfunktion 1 wie folgt:

$$Mgrenz = Mzul - \Delta n2 * Mzul/offs2 \qquad (1).$$

Der Zusammenhang (1) gilt dabei für $0 <= \Delta n2 <= offs2$. für $\Delta n2 <= Null$ ist Mgrenz=Mzul und für $\Delta n2 >= offs2$ ist Mgrenz=0. Abhängig von der zugeführten Differenzdrehzahl $\Delta n2$ als Eingangsgröße liefert dann die Kennlinie 45 gemäß den oben beschriebenen Zusammenhängen den Grenzwert Mgrenz als Ausgangsgröße. Der Grenzwert Mgrenz wird dann ebenfalls an das Minimalauswahlglied 50 weitergeleitet. Der Wert offs2 für die Drehzahldifferenz $\Delta n2$, bei der der zweite Wert für den Grenzwert Mgrenz beispielsweise gemäß der linearen Rampenfunktion 1 zu Null wird, kann beispielsweise ebenfalls auf einem Prüfstand derart geeignet appliziert werden, dass durch die Begrenzung des Drehmoments der Antriebseinheit zum einen ein unerwünschter Anstieg der Istdrehzahl nist über die Solldrehzahl nsoll vermieden und zum anderen der Grenzwert Mgrenz=0 erst bei einer möglichst großen Drehzahldifferenz $\Delta n2$ erreicht wird.

Die Verringerung des zweiten Wertes ausgehend vom maximal zulässigen Wert Mzul bis auf den Wert Null kann dabei auf dem Prüfstand andererseits derart appliziert werden, dass sich für die entsprechenden Differenzdrehzahlen Δn2 jeweils ein möglichst großer Grenzwert Mgrenz ergibt.

Das Minimalauswahlglied 50 wählt aus dem Sollwert Msoll und dem Grenzwert Mgrenz den kleineren Wert aus und gibt ihn als resultierenden Sollwert Msollres an eine Weiterverarbeitung zur Umsetzung dieses resultierenden Sollwertes ab. Die Umsetzung kann dabei beim Beispiel einer Brennkraftmaschine durch entsprechende Einstellung der Stellgrößen Kraftstoffzufuhr, Luftzufuhr und im Falle eines Ottomotors Zündwinkel erfolgen. Diese Weiterverarbeitung kann dabei ebenfalls noch im Steuergerät und damit in der Vorrichtung 10 erfolgen oder aber in einem davon getrennten Steuergerät.

Zusätzlich kann es gemäß einer vorteilhaften Weiterbildung vorgesehen sein, dass eine Ermittlungseinheit 40 zur Ermittlung eines Istwertes Mist für das Drehmoment der Antriebseinheit innerhalb oder außerhalb der Vorrichtung 10 vorgesehen ist. Die Ermittlungseinheit kann dabei in dem Fachmann bekannter Weise eine geeignete Sensorik aufweisen, um den Istwert Mist für das Drehmoment zu bestimmen oder alternativ ebenfalls in dem Fachmann bekannter Weise ein Momentenmodell darstellen, das den Istwert Mist des Drehmoments der Antriebseinheit aus weiteren Betriebsgrößen der Antriebseinheit berechnet. Der ermittelte Istwert Mist für das Drehmoment wird zusammen mit dem Grenzwert Mgrenz einer zweiten Vergleichseinheit 55 der Vorrichtung 10 zugeführt. Die zweite Vergleichseinheit 55 prüft, ob der Istwert Mist den Grenzwert Mgrenz um mehr als einen vorgegebenen Toleranzwert überschreitet. Ist dies der Fall, so wird ein Fehler erkannt und ein Fehlersignal F am Ausgang der zweiten Vergleichseinheit 55 gesetzt andernfalls ist das Fehlersignal F zurückgesetzt. Bei gesetztem Fehlersignal F wird ein Eintrag in einen Fehlerspeicher erzeugt und/oder eine optische und/oder akustische Wiedergabe des Fehlers eingeleitet und/oder eine Fehlerreaktionsmaßnahme eingeleitet, die beispielsweise darin besteht, dass das Steuergerät auf einen vorgegebenen Standardzustand zurückgesetzt oder in letzter Konsequenz die Antriebseinheit abgeschaltet wird. Es kann auch ein Fehlerzähler vorgesehen sein, der mit jedem Setzimpuls am Ausgang der zweiten Vergleichseinheit 55 hochgezählt wird, ausgehend von einem vorgegebenen Zählerstand und dass ein Fehler erst bei Erreichen eines vorgegebenen Schwellwertes durch den hochgezählten Fehlerstand erkannt wird. Die so realisierte Momentenüberwachung durch die zweite Vergleichseinheit 55 wird somit nicht nur für negative Werte der Drehzahldifferenz Δn2 durchgeführt, bei der der Istwert Mist mit dem maximal zulässigen Wert Mzul als Grenzwert Mgrenz verglichen wird, sondern auch für positive Werte der Drehzahldifferenz Δn2, bei der der Istwert Mist des Drehmoments mit dem ausgehend vom maximal zulässigen Moment Mzul verringerten zweiten Wert des Grenzwertes Mgrenz verglichen wird.

Die beschriebene Weiterbehandlung des Fehlersignals F kann innerhalb der Vorrichtung 10 oder aber auch in einem davon verschiedenen Steuergerät durchgeführt werden.

Im folgenden wird ein Beispiel für die Bildung des Sollwertes Msoll des Drehmomentes beschrieben. Gemäß einer vorteilhaften Weiterbildung der Erfindung ist dabei ein Regler 5 in der Vorrichtung 10 vorgesehen, dem einerseits die Solldrehzahl nsoll von der Vorgabeeinheit 20 und andererseits die Istdrehzahl nist vom Drehzahlsensor 30 zugeführt sind. Der Regler 5 bildet die Regeldifferenz Δn1 = nist - nsoll als erste Drehzahldifferenz. Abhängig von der ersten Drehzahldifferenz Δn1 bildet der Regler 5 dann den Sollwert Msoll für das Drehmoment der Antriebseinheit derart, dass die Regeldifferenz Δn1 minimal wird und damit die Istdrehzahl nist der Solldrehzahl nsoll nachgeführt wird. Der Regler 5 kann dabei beispielsweise in dem Fachmann bekannter Weise einen Integralanteil und/oder einen Proportionalanteil und/oder einen Differenzialanteil umfassen.

Der erste Offsetwert offs1 kann kleinstenfalls den Wert Null annehmen. In diesem Fall würde keine Toleranz für das Überschreiten der Solldrehzahl nsoll durch die Istdrehzahl nist erreicht.

Aufgrund der Kennlinie 45 wird der Sollwert Msoll für das Drehmoment im Minimalauswahlglied 50 nur dann auf den zweiten Wert kleiner dem maximal zulässigen Wert begrenzt, wenn die Istdrehzahl nist die Solldrehzahl nsoll um mehr als den ersten Offsetwert offs1 überschreitet, wobei letzterer wie beschrieben kleinstenfalls auch Null sein kann.

Im folgenden wird ein Zahlenbeispiel für die lineare Rampenfunktion 1 gemäß Gleichung (1) gegeben:

So kann für das maximal zulässige Moment Mzul in einem durch die Fahrpedalstellung und die Istdrehzahl nist gemäß der DE 197 39 564 A1 definierten Arbeitspunkt der Antriebseinheit beispielsweise ein Wert von 1000Nm vorgegeben sein. Für den zweiten Offsetwert offs2 kann beispielsweise ein Wert von 300 Umdrehungen pro Minute vorgegeben sein. Somit ist die lineare Rampenfunktion 1 gemäß Gleichung (1) eindeutig definiert. Für die Bestimmung der Drehzahldifferenz Δn2 kann als erster Offsetwert offs1 beispielsweise ein Wert von 100 Umdrehungen pro Minute vorgegeben sein. Für die Solldrehzahl nsoll kann beispielsweise ein Wert von 1500 Umdrehungen pro Minute vorgegeben sein. Dies ergibt dann bei einer Istdrehzahl nist von beispielsweise 1800 Umdrehungen pro Minute einen Grenzwert Mgrenz von 333,3 Nm.

Ein fehlerhafter Anstieg des Istwertes Mist des Drehmomentes über den Grenzwert Mgrenz bzw. ein fehlerhafter Anstieg der Istdrehzahl nist über die Solldrehzahl nsoll kann dann beispielsweise durch einen Fehler im Regler, beispielsweise durch eine falsche Bedatung der Reglerparameter, oder generell einen Fehler in einem Prozessor oder Mikrocontroller der Vorrichtung 10 bzw. der Motorsteuerung begründet sein, der für die Ermittlung der Stellgrößen zur Umsetzung des Sollwertes Msoll für das Drehmoment verwendet wird.

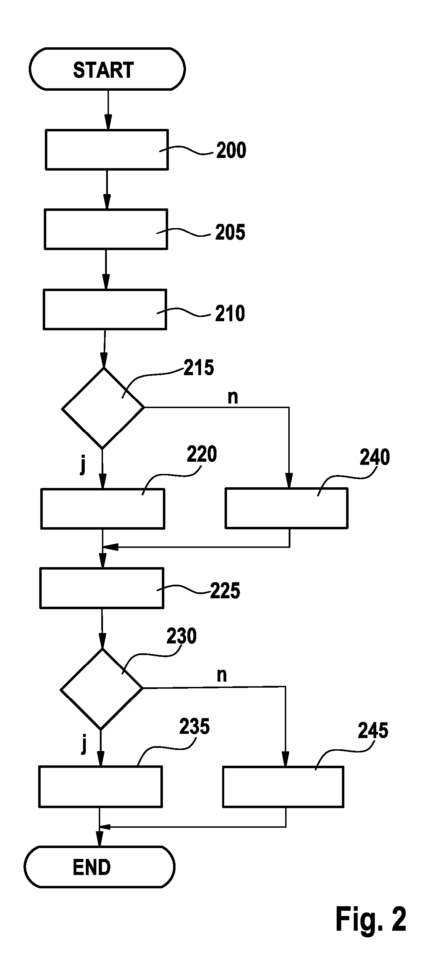

In Figur 2 ist ein Ablaufplan für einen beispielhaften Ablauf des erfindungsgemäßen Verfahren dargestellt.

Nach dem Start des Programms wird bei einem Programmpunkt 200 von der Vorgabeeinheit 20 die Solldrehzahl nsoll bestimmt und vom Drehzahlsensor 30 die Istdrehzahl nist erfasst. Außerdem wird von der Ermittlungseinheit 40 der Istwert Mist für das Drehmoment bestimmt. Anschließend wird zu einem Programmpunkt 205 verzweigt.

Bei Programmpunkt 205 ermittelt der Regler 5 den Sollwert Msoll für das Drehmoment in Abhängigkeit der Solldrehzahl nsoll und der Istdrehzahl nist bzw. der daraus abgeleiteten ersten Drehzahldifferenz $\Delta n1$ wie beschrieben. Anschließend wird zu einem Programmpunkt 210 verzweigt.

Bei Programmpunkt 210 wird durch das Additionsglied 60 die Summe aus der Solldrehzahl nsoll und dem ersten Offsetwert offs1 gebildet. Anschließend wird zu einem Programmpunkt 215 verzweigt.

Bei Programmpunkt 215 prüft die erste Vergleichseinheit 25, ob die Istdrehzahl nist größer als die Summe aus Solldrehzahl nsoll und erstem Offsetwert offs1 ist. Ist dies der Fall, so wird zu einem Programmpunkt 220 verzweigt, andernfalls wird zu einem Programmpunkt 240 verzweigt.

Bei Programmpunkt 220 bildet die Kennlinie 45 den Grenzwert Mgrenz gemäß der linearen Rampenfunktion 1 nach Gleichung (1) für $0<\Delta n2<offs2$. Ferner bildet die Kennlinie 45 den Grenzwert Mgrenz=0 für $\Delta n2 >=offs2$ bei Programmpunkt 220.

Der maximal zulässige Wert Mzul ist größer als Null. Für $\Delta n2$ größer oder gleich offs2 ist der zweite Wert für den Grenzwert Mgrenz gleich Null und damit ebenfalls kleiner als der maximal zulässige Wert Mzul.

Anschließend wird zu einem Programmpunkt 225 verzweigt.

Bei Programmpunkt 240 bildet die Kennlinie 45 den Grenzwert Mgrenz gleich den maximal zulässigen Wert Mzul. Anschließend wird zu Programmpunkt 225 verzweigt.

Bei Programmpunkt 225 bildet das Minimalauswahlglied 50 den resultierenden Sollwert Msollres für das Drehmoment als den kleineren aus den beiden Werten Msoll und Mgrenz. Anschließend wird zu einem Programmpunkt 230 verzweigt.

Bei Programmpunkt 230 prüft die zweite Vergleichseinheit 55, ob der Istwert Mist für das Drehmoment größer als der Grenzwert Mgrenz ggf. zuzüglich einem vorgegebenen Toleranzwert ist, wobei letzterer beispielsweise auf einem Prüfstand appliziert werden kann. Ist dies der Fall, ist also der Istwert Mist größer der Summe aus Grenzwert Mgrenz und Toleranzwert, so wird zu einem Programmpunkt 235, andernfalls wird zu einem Programmpunkt 245 verzweigt.

Der Toleranzwert kann dabei kleinstensfalls gleich Null gewählt werden, wobei in diesem Fall dann beim Momentenvergleich in der ersten Vergleichseinheit 55 keine Toleranz berücksichtigt wird.

Bei Programmpunkt 235 wird das Fehlersignal F gesetzt. Anschließend wird das Programm verlassen. Bei Programmpunkt 245 wird das Fehlersignal F zurückgesetzt. Anschließend wird das Pogramm verlassen.

Wie bereits beschrieben, lässt sich die Erfindung gemäß dem ersten Ausführungsbeispiel in analoger Weise für das zweite Ausführungsbeispiel realisieren, wobei statt der Solldrehzahl nsoll der Antriebseinheit eine Sollgeschwindigkeit vsoll des Fahrzeugs und statt der Istdrehzahl nist eine Istgeschwindigkeit vist des Fahrzeugs verwendet wird. Der Regler 5 führt dann eine Fahrgeschwindigkeitsregelung gemäß einer ersten Geschwindigkeitsdifferenz $\Delta v1$ zwischen Istgeschwindigkeit vist und Sollgeschwindigkeit vsoll durch.

Im folgenden wird für das zweite Ausführungsbeispiel die Kennlinie des Grenzwertes für das Drehmoment der Antriebseinheit in Abhängigkeit einer zweiten Geschwindigkeitsdifferenz $\Delta v2$= vist - (vsoll + voffs1) anhand von Figur 4 und eines Zahlenbeispiels erläutert. voffs1 ist dabei analog dem ersten Offsetwert offs1 für die Drehzahl der erste Offsetwert für die Geschwindigkeit. Die Kennlinie 46 für die Bildung des Grenzwertes Mgrenz nach Figur 4 abhängig von der zweiten Geschwindigkeitsdifferenz $\Delta v2$ lautet dabei wie folgt:

$$\text{Mgrenz=Mzul für } \Delta v2<0$$

$$\text{Mgrenz = Mzul - } \Delta v2 * \text{Mzul/voffs2 für } 0<= \Delta v2<=voffs2 \qquad (2)$$

$$\text{Mgrenz =0 für } \Delta v2>voffs2$$

voffs2 ist dabei analog dem zweiten Offsetwert offs2 für die Drehzahl der zweite Offsetwert für die Geschwindigkeit. Gleichung (2) stellt dabei die lineare Rampenfunktion 2 nach Figur 4 dar.

Die Funktionsweise dieser Momentenbegrenzung nach Figur 4 ist im folgenden anhand eines Zahlenbeispiels beschrieben.

Bis zum ersten Offsetwert für die Geschwindigkeit z.B. voffs1=2 km/h über der Sollgeschwindigkeit vsoll wird der maximal zulässige Wert Mzul für das Drehmoment als Stellgröße für den Fahrgeschwindigkeitsregler erlaubt, weil keinerlei Information über die Last bei dieser Geschwindigkeit vorhanden ist, und eine gewisse Reserve für Vorsteuerungen und die unmanipulierte Reglerarbeit notwendig ist.

Bis zum zweiten Offsetwert voffs2 der zweiten Geschwindigkeitsdifferenz $\Delta v2$ von z.B. voffs2=2 km/h wird der Grenzwert Mgrenz dann linear vom maximal zulässigen Wert bei Δv2=0 auf 0Nm bei Δv2=2km/h heruntergerampt und der Regler darauf begrenzt. Das bedeutet z.B. bei Mzul=1000Nm, vsoll=60km/h, vist=63km/h, voffs1=2km/h und voffs2=2km/h ist der zugeordnete Grenzwert gemäß Kennlinie 46 dann Mgrenz=500Nm.

**Patentansprüche**

1. Verfahren zum Betreiben einer Antriebseinheit, bei dem eine erste Ausgangsgröße (Msoll) der Antriebseinheit begrenzt wird, wobei ein Sollwert für eine zweite Ausgangsgröße der Antriebseinheit, vorzugsweise eine Drehzahl (nsoll) oder eine Geschwindigkeit (vsoll) vorgegeben wird, wobei ein Istwert der zweiten Ausgangsgröße der Antriebseinheit ermittelt wird, wobei der Sollwert mit dem Istwert verglichen wird, wobei für den Fall, in dem kein Überschreiten des Sollwertes durch den Istwert festgestellt wird, die erste Ausgangsgröße (Msoll) auf einen ersten Wert (Mzul) begrenzt wird und wobei für den Fall, in dem ein Überschreiten des Sollwertes durch den Istwert um einen vorgebbaren Offsetwert (offs1) festgestellt wird, die Ausgangsgröße (Msoll) auf einen zweiten Wert kleiner als der erste Wert (Mzul) begrenzt wird, wobei als erster Wert (Mzul) ein maximal zulässiger Wert gewählt wird, **dadurch gekennzeichnet, dass** für den Fall, in dem ein Überschreiten des Sollwertes der zweiten Ausgangsgröße durch den Istwert der zweiten Ausgangsgröße festgestellt wird, geprüft wird, ob ein Istwert (Mist) für die erste Ausgangsgröße den zweiten Wert um mehr als einen vorgegebenen Toleranzwert überschreitet und dass in diesem Fall ein Fehler erkannt und eine Fehlerreaktionsmaßnahme eingeleitet wird.

2. Verfahren nach einem der vorherigen Ansprüche, **dadurch gekennzeichnet, dass** der zweite Wert mit zunehmender Überschreitung des Sollwertes durch den Istwert kleiner gewählt wird.

3. Verfahren nach Anspruch 2, **dadurch gekennzeichnet, dass** der zweite Wert mit zunehmender Überschreitung des Sollwertes durch den Istwert linear gemäß einer Rampenfunktion (1) verringert wird.

4. Verfahren nach einem der vorherigen Ansprüche, **dadurch gekennzeichnet, dass** zur Begrenzung der ersten Ausgangsgröße ein Sollwert (Msoll) für die erste Ausgangsgröße begrenzt wird.

5. Verfahren nach einem der Ansprüche 1 bis 4, **dadurch gekennzeichnet, dass** abhängig vom Vergleich zwischen dem Sollwert und dem Istwert der zweiten Ausgangsgröße ein Regler (5) einen Sollwert für die erste Ausgangsgröße (Msoll) vorgibt, um den Istwert der zweiten Ausgangsgröße dem Sollwert der zweiten Ausgangsgröße nachzuführen und dass zur Begrenzung der ersten Ausgangsgröße der Sollwert (Msoll) für die erste Ausgangsgröße begrenzt wird.

6. Verfahren nach einem der vorherigen Ansprüche, **dadurch gekennzeichnet, dass** als erste Ausgangsgröße ein Drehmoment, insbesondere ein indiziertes Drehmoment, oder eine Leistung der Antriebseinheit gewählt wird.

7. Vorrichtung (10) zur Durchführung jedes Schrittes eines Verfahrens nach einem der vorangegangenen Ansprüche.

**Claims**

1. Method for operating a drive unit, in which a first output variable (Msetp) of the drive unit is limited, wherein a setpoint value for a second output variable of the drive unit, preferably a rotational speed (nsetp) or a speed (vsetp) is predefined, wherein an actual value of the second output variable of the drive unit is determined, wherein the setpoint value is compared with the actual value, wherein if it is detected that the setpoint value is not exceeded by the actual value, the first output variable (Msetp) is limited to a first value (Mzul), and wherein, if it is detected that the setpoint value is exceeded by the actual value by a predefinable offset value (offs1), the output variable (Msetp) is limited to a second value which is smaller than the first value (Mzul), wherein a maximum permissible value is selected as the first value (Mzul), **characterized in that** if it is detected that the setpoint value of the second output variable is exceeded by the actual value of the second output variable it is checked whether an actual value (Mact) for the first output variable exceeds the second value by more than a predefined tolerance value, and **in that** in this case a fault is detected and a fault reaction measure is initiated.

2. Method according to one of the preceding claims, **characterized in that** the second value is selected to be smaller as the setpoint value is increasingly exceeded by the actual value.

3. Method according to Claim 2, **characterized in that** as the setpoint value is increasingly exceeded by the actual value the second value is reduced linearly according to a ramp function (1).

4. Method according to one of the preceding claims, **characterized in that** a setpoint value (Msetp) for the first output variable is limited in order to limit the first output variable.

5. Method according to one of Claims 1 to 4, **characterized in that** a regulator (5) predefines a setpoint value for the first output variable (Msetp) as a function of the comparison between the setpoint value and the actual value of the second output variable, in order to adjust the actual value of the second output variable in accordance with the setpoint value of the second output variable, and **in that** the setpoint value (Msetp) for the first output variable is limited in order to limit the first output variable.

6. Method according to one of the preceding claims, **characterized in that** a torque, in particular an indexed torque, or a power of the drive unit, is selected as the first output variable.

7. Apparatus (10) for carrying out every step of a method according to one of the preceding claims.

**Revendications**

1. Procédé pour faire fonctionner une unité d'entraînement, dans lequel une première grandeur de départ (Msoll) de l'unité d'entraînement est limitée, une valeur de consigne pour une deuxième grandeur de départ de l'unité d'entraînement, de préférence une vitesse de rotation (nsoll) ou une vitesse (vsoll) étant prédéfinie, une valeur actuelle de la deuxième grandeur de départ de l'unité d'entraînement étant déterminée, la valeur de consigne étant comparée avec la valeur actuelle, et dans le cas où aucun dépassement de la valeur de consigne par la valeur actuelle n'est constaté, la première grandeur de départ (Msoll) étant limitée à une première valeur (Mzul) et dans le cas où un dépassement de la valeur de consigne par la valeur actuelle d'une valeur de décalage prédéfinissable (offs1) est constaté, la grandeur de départ (Msoll) étant limitée à une deuxième valeur inférieure à la première valeur (Mzul), une valeur maximale admissible étant sélectionnée en tant que première valeur (Mzul), **caractérisé en ce que** dans le cas où un dépassement de la valeur de consigne de la deuxième grandeur de départ par la valeur actuelle de la deuxième grandeur de départ est constaté, on vérifie si une valeur actuelle (Mist) pour la première grandeur de départ dépasse la deuxième valeur de plus d'une valeur de tolérance prédéfinie et **en ce que** dans ce cas, une erreur est reconnue et une mesure de réaction à l'erreur est entamée.

2. Procédé selon la revendication précédente, **caractérisé en ce que** la deuxième valeur est choisie plus petite avec l'augmentation du dépassement de la valeur de consigne par la valeur actuelle.

3. Procédé selon la revendication 2, **caractérisé en ce que** la deuxième valeur est réduite linéairement selon une fonction en rampe (1) avec l'augmentation du dépassement de la valeur de consigne par la valeur actuelle.

4. Procédé selon l'une quelconque des revendications précédentes, **caractérisé en ce que** pour limiter la première grandeur de départ, une valeur de consigne (Msoll) pour la première grandeur de départ est limitée.

5. Procédé selon l'une quelconque des revendications 1 à 4, **caractérisé en ce qu'**en fonction de la comparaison entre la valeur de consigne et la valeur actuelle de la deuxième grandeur de départ, un dispositif de réglage (5) prédéfinit une valeur de consigne pour la première grandeur de départ (Msoll) afin d'asservir la valeur actuelle de la deuxième grandeur de départ à la valeur de consigne de la deuxième grandeur de départ et **en ce que** pour la limitation de la première grandeur de départ, la valeur de consigne (Msoll) pour la première grandeur de départ est limitée.

6. Procédé selon l'une quelconque des revendications précédentes, **caractérisé en ce que** l'on choisit en tant que première grandeur de départ un couple, en particulier un couple indexé, ou une puissance de l'unité d'entraînement.

7. Dispositif (10) pour mettre en oeuvre chaque étape d'un procédé selon l'une quelconque des revendications précédentes.

$M_{soll, res}$

$F$

50

10

55

15

$M_{soll}$

45

$M_{grenz}$

$M_{grenz}$

$\Delta n_2$

0

M I N

5

25

$\Delta n_2 = n_{ist} - (n_{soll} + offs_1)$

20

$n_{soll}$

$n_{ist}$

$n_{soll} + offs_1$

60

$offs_1$

30

35

$M_{ist}$

40

**Fig. 1**

Fig. 2

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19739564 A1
- DE 19739564 A2